# EUROPEAN PATENT APPLICATION

(11) **EP 4 462 746 A1**
(43) Date of publication of application: **13.11.2024**
(21) Application number: 23172876.7
(22) Date of filing: 11.05.2023
(51) Int. Cl.: H04L 43/0805, H04L 43/0811

(54) **METHOD AND SYSTEM FOR A HOT STANDBY CONCEPT FOR REDUNDANT NETWORK SYSTEMS**

(71) Applicant: Unify Patente GmbH & Co. KG, 81739 München (DE)
(72) Inventor: Armenio Neto, Joao, Curitiba (BR)
(74) Representative: Schaafhausen Patentanwälte PartGmbB

(57) **Abstract**

The present invention relates to a method and a system for a hot standby concept in redundant network systems. In particular, the present invention relates to a method and a system for a hot standby concept in communication systems.

## Description

The present invention relates to a method and a system for a hot standby concept in redundant network systems. In particular, the present invention relates to a method and a system for a hot standby concept in communication systems.

In many network systems, redundant components are in so-called hot standby and then become active as soon as a component of the active system fails. This is the case in fault-tolerant systems in which the hot standby components - switches, routers, backup servers or backup nodes - remain in a waiting function (standby) as long as the active primary component is working properly. Only if the primary component or transmission link or connection fails, the hot standby component goes into action and takes over the function of the primary component. Such hot standby devices are used wherever data or other information could be lost such as in fault-tolerant storage systems.

Hot standby is a redundant method and generally data is mirrored in real-time between system components, thus, in case of a failover, both system components have identical data. The change from a standby component to an active component is also called a switchover or a failover. A switchover is the manual switch from one active component to a redundant or a standby component in a network system upon the failure or abnormal termination of the previously active system in this network. A switchover can also take place without an error, e. g. to perform system maintenance, such as installing patches, upgrading software or hardware. Automatic switchover of a redundant system on an error condition, without human intervention, is also called a failover.

Therefore, hot standby also is described as a failover technique to ensure system reliability and security. Furthermore, hot standby also describes the ability of a system component to connect to another system component and run read-only queries while being in standby or recovery mode. Additionally, it describes the ability of a system to continually answer queries while maintaining open connections for users or clients during recovery to normal operations in case of a system component failure.

Therefore, a hot standby component is usually designed to significantly reduce the time required for a failed system to return to normal operations, ensuring to provide nearly 100 percent system availability.

Hot standby systems that are known from the prior art control the access to shared storage devices in which the nodes which are members of the cluster. Moreover, a cluster of systems which have a token manager connected to a common resource accessible by all of the systems comprising a token pool of tokens is also described.

Patent US 7,853,835 describes a token-based lightweight approach to manage the active-passive system topology in a distributed computing environment. Here a mechanism is described in which the active/standby computers share at least one resource, and they are combined with a path heartbeat for mutually monitoring each other and with a reset path for mutually stopping computer operations. However, such systems need to establish a connection between the redundant nodes to check the free shared resource in the other node. If the connection between the nodes fails, there is no way to determine if the other node failed or if the communication between the nodes failed. In addition, these systems use a pool of tokens to determine the active node.

Thus, the object of the present invention is to overcome the limitations of the state of the art and to provide a method and a system for a hot standby concept for redundant network system which indirectly mediates between redundant nodes of a network.

The object of the present invention is solved by a method having the features according to claim 1 and a system having the features of claim 11. Preferred embodiments of the invention are defined in the respective dependent claims.

According to the invention, a method for a hot standby concept in network systems is provided, wherein the method comprising the steps of:
- establishing, by an application of a first node, a first connection to a resource component;
- requesting, by the application of the first node, to start monitoring a first resource, wherein the first resource is part of the resource component;
- receiving, by the application of the first node, an acceptance to monitor the first resource from the resource component, and setting the first node as an active node;
- establishing, by an application of a second node, a second connection to the resource component;
- requesting, by the application of the second node, to start monitoring the first resource;
- receiving, by the application of a second node, the rejection to monitor the first resource from the resource component, and setting the second node as a standby node;
- starting, by the application of the second node, a retry timer configured to request again to monitor the first resource, if the retry timer is expired;
- releasing, by the resource component, the monitoring of the first resource from the application of the first node, if a failure in the first connection is detected;
- requesting, by the application of the second node, to monitor the first resource from the resource component, if the retry timer is expired; and
- receiving, by the application of a second node, the acceptance to monitor the first resource from the resource component and setting the second node as active node.

Hot standby solutions can be built by creating a communication between the redundant nodes to verify the health of the nodes and decide about the moment to perform a switchover/failover between the nodes. Usually, a third component or third party is added to perform the mediation in order to avoid split brain situations. Such a third component can be an application or software mostly implemented at the side of the nodes, therefore in terms of the present invention such an application is also named application of a node. However, in the sense of the present invention an application can be any kind of software and/or hardware which is capable to fulfill the steps of the present method in which such an application is involved. However, the application is also not limited to be physically at the side of the nodes but can also be implemented in other network components. A cloud solution is also conceivable.

A node is a connection point in the sense of the invention. It is either a point for redistribution or an end point for data transmissions. Generally speaking, a node is programmed or designed to have options to forward transmissions to other nodes. A node can be a network component such as a server, a switch, a gateway, a computer unit or other. In the physical sense, a network comprises network nodes and connections. They perform switching, distribution and concentration functions in (telecommunication) networks. Links or transmission data are the physical connection between network nodes.

For the sake of the invention, a connection is any type of transport path for data in a network. The connections can be multi-layered and can use different protocols for the transmission of data, e. g. Computer Supported Telecommunications Applications (CSTA) and the internet protocol suite. The Internet protocol suite, commonly known as TCP/IP, is a framework for organizing the set of communication protocols used in the internet and similar computer networks according to functional criteria. The foundational protocols in the suite are the Transmission Control Protocol (TCP), the User Datagram Protocol (UDP), and the Internet Protocol (IP). The term Computer Supported Telecommunications Applications (CSTA) is an abstraction layer for telecommunications applications. It is independent of underlying protocols. Further, it has a telephone device model that enables CTI applications to work with a wide range of telephone devices. Computer telephony integration, also called computer-telephone integration or CTI, is a common name for any technology that allows interactions on a telephone and a computer to be coordinated. The core of CSTA is a normalized call control model. Additional to the core, there are call associated features and physical device features amongst others. An implementation of the standard does not need to provide all features, and so profiles are provided. For example, the basic telephony profile provides such features as making and/or answering a call and clearing a connection.

According to a preferred embodiment of the present invention, any redundant system which consumes a resource in a resource component that is reserved for one consumer at a time is provided. If the redundant system is composed by a first node and a second node, as soon as the consumed resource is reserved for the first node, the redundant system can assume that the first node is the active component or node of the redundant system. When the second node tries to reserve the consumed resource, it will receive a negative response and it will be set to standby mode. By periodically trying to reserve the consumed resource with help of a retry timer, the second node will become the active node, if the first node has somehow failed and the consumed resource has been released.

According to a preferred embodiment, the method further comprises the steps of:
- receiving, by the application of the first node, a rejection to monitor the first resource from the resource component, and setting the first node as a standby node; and
- starting, by the application of the first node, a retry timer for periodically requesting to monitor the first resource of the resource component, in case the first resource is available for monitoring.

The retry timer is set by a node in case the node is set to standby. The standby node sends request within a time interval set in the timer to monitor the resource, for example, a hunt group, to check if the first resource is available.

The standby node will keep trying to start periodically monitoring the hunt group according to the retry timer. Once the standby node receives a positive response, it will take over the active status and proceed with the handling of calls to a contact center system e.g. inside of a Private Branch Exchange (PBX), as the resource components.

According to a preferred embodiment, the active and standby node are the controllers of a contact center system which places calls in a queue of a hunt group, inside of a Private Branch Exchange (PBX).

According to a preferred embodiment, the method further comprises sending, by the application of the first or the second node, a snapshot request to the resource component to receive a current status of the resource, in case the first or the second node is the active node. The snapshot gives the active node an overview of the resource. If the resource is, for example, a hunt group inside a Private Branch Exchange (PBX), then the snapshot may comprise how many calls are currently in the hunt group or in its queue. However, if the resource is any kind of pending transaction, which in a contact center as the resource component would mean pending contacts or queued contacts, then these snapshots provide a contact ID and data about the waiting contact, like the time in a queue, the contact originator or any other data which allows re-taking the contact handling with less impact to the contact originator.

According to another preferred embodiment, the method further comprises querying, by the application of the first node, the resource component if a second or any further hunt group is available for monitoring; requesting, by the application of the first node, to monitor the second or any further resource; generating an alarm, by the application of the first node, in case the request to monitor the second or any further resource is rejected by the resource component; and repeating, by the application of the first node, the aforementioned steps until no further resource is available for monitoring, and ending the method, wherein the first node remains as active node.

According to still another preferred embodiment, the method after the step of requesting, by the application of the first node, to monitor the second or any further resource, further comprises receiving, by the application of the first node, the acceptance to monitor the second or any further resource from the resource component; sending, by the application of the first node, a snapshot request to the resource component to receive a current status of the second or any further resource; and repeating, by the application of the first node, the aforementioned steps of querying to send a snapshot request until no further resource is available for monitoring and ending the method, wherein the application of the first node remains as active node.

Further, according to a preferred embodiment, the method further comprises setting, by the application of the first, the second or any further node, a health check timer interval, in case the first, the second or any further node is the active node; sending, by the application of the active node, a health check message every n part of the health check time interval to the resource component, wherein the health check message comprises the health check timer interval; and setting, by the resource component, upon receiving the health check message a health check timer according to the received health check timer interval from the application of the active node.

According to yet another preferred embodiment, the method further comprises releasing, by the resource component, the monitoring of the first resource from the application of the active node in case the health check timer expires without receiving a health check message by the application of the active node, wherein then the active node is no longer considered as the active node. If the active node fails to respond to the resource component within the health check timer interval, it will assume that the node is not able to monitor the resource anymore. Then the resource component will release the resource again for monitoring by the other nodes of the network. When a current standby node tries again to monitor the resource according to its retry timer settings, this node eventually receives a positive response and will take over to monitor the resource and is then considered as the active node.

According to yet another preferred embodiment, the n part of a health check time interval is ≤ 2/3, preferably ≤ 1/2, and most preferably ≤ 1/3. Here, n represents a real number. Wherein n can be a time component such as seconds, thus, in order to keep the monitoring of a resource active, for example, a hunt group, the active first node will send a health check every n seconds. In another preferred embodiment, n is 30 seconds, preferably n is 20 seconds, more preferably n is 15 seconds, and most preferably n is 10 seconds.

According to yet another preferred embodiment, the resource is a conference call session, a video session, a contact center queue, or any kind of transaction queue, a hunt group.

According to yet another preferred embodiment, the resource component is a communication and collaboration system, a communication platform, a business telephone system, a Private Branch Exchange (PBX) system, a media or content server, a contact center or any kind of transaction handler.

Communication and/or collaboration platforms can be provided as a cloud-based delivery model or service that allows organizations to add real-time communications capabilities such as voice, video and messaging, to business applications by deploying application programming interfaces (APIs).

In telephony platforms or systems, line hunting (or hunt group) is a method of distributing phone calls from a single telephone number to a group of several phone lines. Specifically, it refers to the process or algorithm used to select which line will receive the call.

A hunt group in a communication system is a group of users which can be reached by means of a common telephone number. The hunt group supports different methods to select the user which will receive the next call. These methods can linear, circular and longest idle. One of the methods allow that an external application controls the routing of calls by means of a CTI interface like CSTA.

For example, in order to be able to define the routing of calls, an application must access the CTI interface and subscribe to this hunt group by starting a so called "active monitoring" for one hunt group. When the subscription is successful every time a call is received in the hunt group, a notification event is sent to the application which has the possibility to define the destination of the call. The communication system only allows one application to subscribe to the hunt group at a time, to avoid collision between different applications. The first application which tries to subscribe to this hunt group will receive a positive response. Any further application which tries to subscribe to this same hunt group will receive a negative response.

Moreover, under normal conditions, which means that the application is monitoring the hunt group, all calls entering a hunt group provisioned for manual hunting (i. e., application-controlled call distribution) are queued. The application monitoring events on hunt group pilot directory number (DN) is responsible for distributing the queued calls using the deflect service.

Once a hunt group is provisioned for manual hunting communication platform, the platform is considered to be in "startup mode". All calls entering a hunt group in "startup mode" will automatically distribute and/or queue calls until an application "takes control". In "startup mode" calls delivered to the hunt group are distributed or queued by a communication platform using circular hunting distribution method(s). This means that calls are distributed to the first or next available member in the group. The next member is determined by the pointer to the next available member in circular fashion. An available member is one that is part of the hunt group and is not busy on a previous call.

Applications, such as the application of the first or second node, "take control" of hunt groups that are in "startup mode" by requesting a monitor start service on the hunt group's pilot DN.

When this occurs, the hunt group remains in manual hunt mode until, for example, a Transmission Control Protocol (TCP) link failure is detected. If the communication platform CSTA components detect a failure on the TCP link associated with a manual hunt group, they clear all monitors on the pilot DN and return an automatic call distribution as in "startup mode". Applications must request the monitoring to start again once the link failure has cleared.

In order to handle the calls, the application of the node needs to actively monitor the hunt group on the communication system, however, the communication system only allows one application to actively monitor the hunt group at a time. Both nodes try to start monitoring the hunt group. The first node will send a request to start monitoring the hunt group and will get a positive response from the communication system, so this node will be the active one. When the second node sends the request to start monitoring the hunt group, it will receive a negative response, so it will be the standby node.

According to the invention, a system for a hot standby concept in redundant network systems is provided, wherein the system is configured to perform the method according to any one of the claims 1 to 10.

According to a preferred embodiment of the invention, the system comprises at least a first node and a second node, at least a first application and a second application, at least a resource component, and at least a resource to be monitored.

It has also to be noted that aspects of the invention have been described with reference to different subject-matters. In particular, some aspects or embodiments have been described with reference to apparatus or system type claims whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular combinations between features relating to the system or apparatus type claims and features relating to the method type claims are considered to be disclosed. The invention and embodiments thereof will be described below in further detail in connection with the drawing(s).
- Fig. 1a - 1c: show in a schematically illustration a switchover/failover process in a redundant system according to an embodiment of the invention.
- Fig. 2: shows a flowchart of a startup process of the method according to an embodiment of the invention.
- Fig. 3: shows a flowchart of a startup process of the method comprising a health check according to another embodiment of the invention.
- Fig. 4: shows a flowchart of a switchover/failover process of the method according to another embodiment of the invention.
- Fig. 5: shows a flowchart of a startup process of the method comprising CSTA protocol, a communication platform and a hunt group according to another embodiment of the invention.
- Fig. 6: shows a flowchart of the method for the setup depicted in Fig. 5 in case of a switchover/failover process according to another embodiment of the invention.
- Fig. 7: shows a flowchart of the method for the setup depicted in Fig. 5 in case of a manual stop process according to another embodiment of the invention.

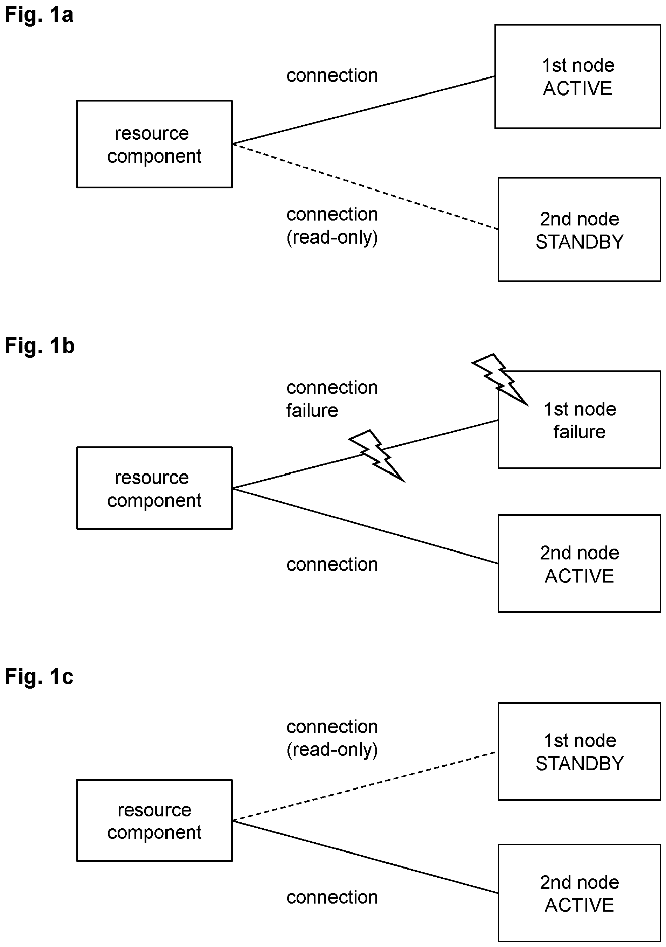

**Fig. 1a** - **1c** schematically illustrate a switchover/failover process of a redundant system. Fig. 1a shows a first and a second node and a resource component of a redundant network. A node is an entity of the network at which data converges or is distributed or originates or reaches its final destination. A node can be, for example, a server, a gateway, a switch, or something else. Both nodes are connected to the resource component via a connection. This can be any kind of connection that allows data to be exchanged between the entities of a network. One of the nodes is marked as an active node and can directly access resources of the resource component via the connection, i. e. it can not only passively monitor and read them, but also actively control and use them. The other node, on the other hand, is on standby, i. e. it can only monitor and read the resources of the resource component via the connection but cannot actively influence them. If an error occurs at the first node, or if the connection between the first node and the resource component is disconnected, or if the first node or the connection to the first node is shut down, then a switch occurs whereby the second node which was previously on standby now becomes the active node and now takes over the control of the active control of resources (see Fig. 1b). When the connection to the first node is re-established and/or the first node is running regularly again, it becomes the standby node and can now read and monitor the data of the resources of the resource component (see Fig. 1c).

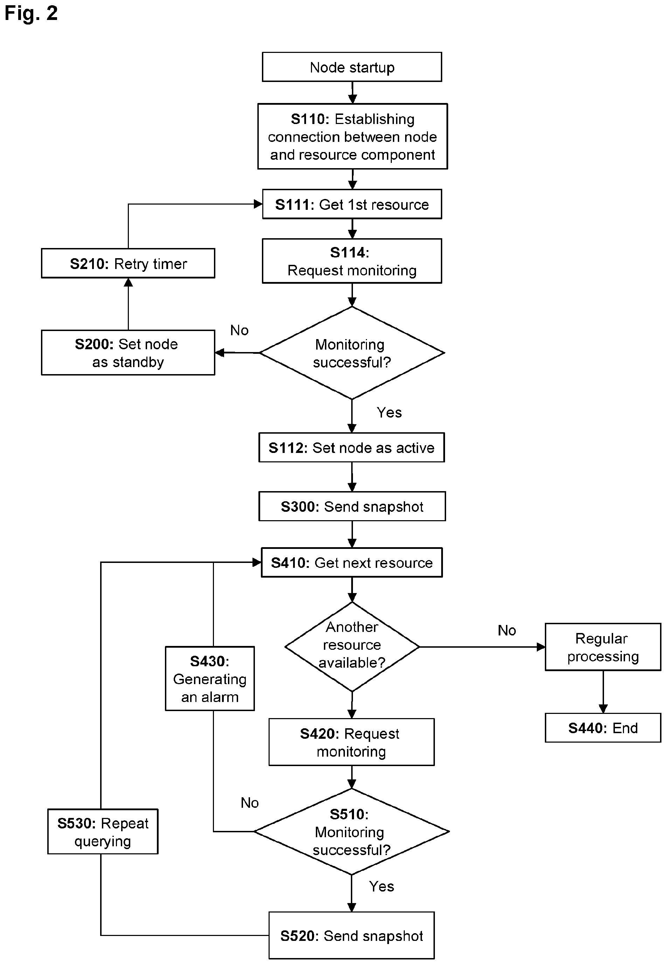

**Fig. 2** shows a flowchart of a startup process of the method. First, a node in a redundant network establishes a connection to a resource component whose resources the node should monitor or actively control (see step S110). Then in step S111/S114, after the connection is established, the node will request one or more resources that the node wants to monitor. However, monitoring here means actively monitoring, which also concerns the control, etc. of the resource. If the requested resource is already monitored by another node, the requesting node can no longer actively monitor it, but only read the data or passively monitor it. The node thus becomes a standby node in step S200 which is informed about all events concerning the resource but cannot actively influence them. The node that is now acting as a standby can, however, periodically request with the help of a retry timer, whether the resource in question is available for actively monitoring and controlling (see step S210). This has the advantage that if the currently active node fails, the standby node can then step in regardless of whether the nodes are aware of each other's status. If, on the other hand, the resource is not or not yet monitored, the node can be made the active node which has all rights to control and change the resource. If in step S112 the node now becomes the active node, the active node usually requests the status of the parameters of the individual resource from the resource component, e. g. if the resource represents a hunt group in a communication system, e. g. a PBX, the number of calls and/or the number of calls in a queue of the hunt group are transmitted with a snapshot (see step 300). If no further resources are available, the node will continue its regular work and the method ends at this point (see step S440). However, if more resources are available in step S410, the active node will try to actively monitor them as well (see step S420). If this is not successful, an alarm is generated so that this is reported to the administrator of the node or the system or another monitoring instance (see step S430). If, in step S510, the other resource can be monitored, a snapshot with the parameters of the resource is usually transmitted to the active node (see step S520). This process of querying and then monitoring another resource is continued by the active node until it is either no longer active or there are no more resources to monitor (see step S530).

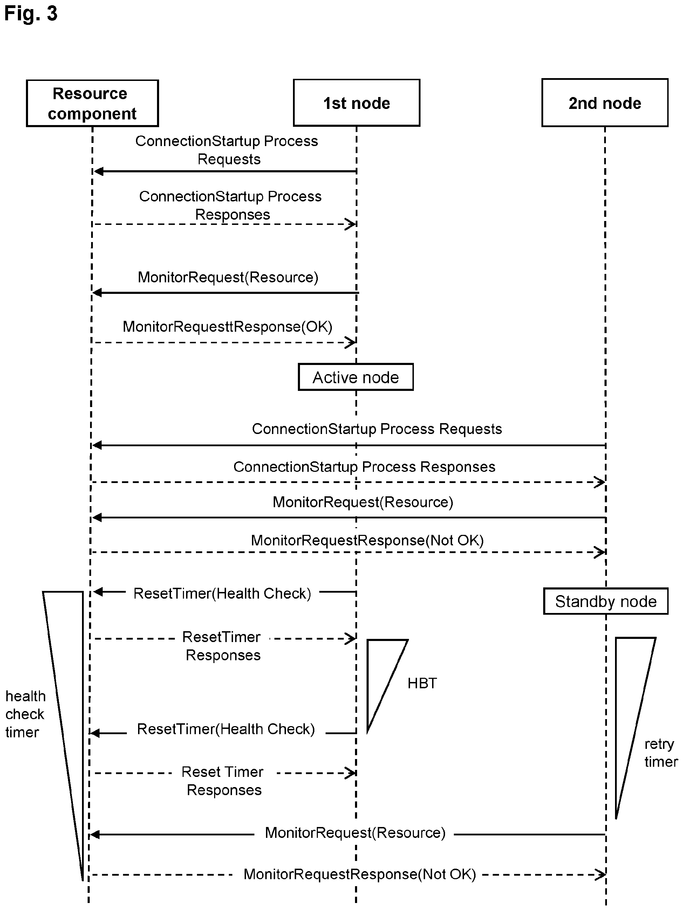

**Fig. 3** shows a flowchart of a startup process of the method comprising a health check according to another embodiment of the invention. As shown in Fig. 3, a resource component is a first node and a second node. Initially, the first node establishes a connection to the resource component (see *"Connection Startup Process Requests"* and *"ConnectionStartup Process Responses"*)*.* This can be any type of connection that allows data to be exchanged between the node and the resource component. Next, the first node requests the resource component to monitor a specific resource (*"MonitorRequest(Resource)"*)*.* In this case, monitoring means actively monitoring, i. e., control of the resource by the first node is possible. If the requested resource is not already monitored, the resource component gives permission to monitor the resource to the first node (*"MonitorRequestResponse*(*OK*)*"*)*.* This first node now becomes the active node if there is not already another active node. A second node now also establishes a connection with the resource component (see *"Connection Startup Process Requests"* and *"Connection Startup Process Responses"*)*.* Subsequently, the second node also tries to monitor the resources (*"MonitorRequest(Resource)"*)*.* Since the resource is already being monitored by the first node, the resource component therefore rejects the monitoring by the second node (*"MonitorRequestResponse(Not OK)"*)*.* The second node then becomes a standby node. This means that the second node can passively monitor the resource via its connection with the resource component, i. e., it only has read rights, but cannot actively influence the resource. The standby node is informed about what is happening to the current resource. The standby node can also set a retry timer, whereby when the retry timer expires, the second node makes another request to the resource component to monitor the resource. The first node sets a health check timer interval which is communicated to the resource component (see *"ResetTimer(Health Check)"*)*.* After receiving the timer interval data, the resource component sets a health check timer and responds to the first node (see *"ResetTimer Responses"*)*.* Then, the first node sets itself a heartbeat timer (HBT) which is a fraction of the health check timer interval. When this HBT expires, the first node sends a message to the resource component to reset the health check timer interval. The resource component's health check timer is therefore reset with each new HBT interval expiry communication. As long as the health check timer is active, the first node remains the active node even if, for example, the second node tries to take over active monitoring of the resource again after its retry timer has expired (see *"MonitorRequest(Resource)"* and *"MonitorRequestResponse(Not OK)"* of second node).

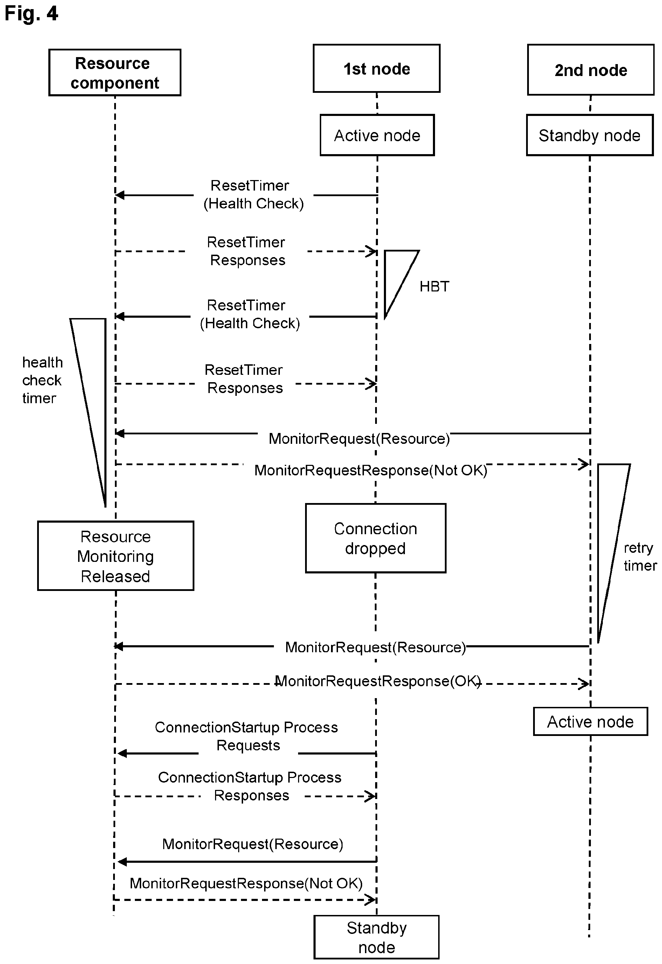

Fig. 4 shows a flowchart of a switchover/failover process of the method according to another embodiment of the invention. For Fig. 4, the description of Fig. 3 can be referred to. The first node which is the active node permanently informs the resource component to reset its health check timer (see *"ResetTimer(Health Check)"*) when its HBT expires, the second node continues to periodically request to monitor the resources of the resource component after its retry timer expires (see *"MonitorRequest(Resource)"* of second node). However, since the active first node is already monitoring the resources, the request is rejected (see *"MonitorRequestResponse(Not OK)"* of second node). In the event of an error or non-functioning of the first node, it will no longer send messages to the resource component. The same applies in the event that the monitoring of the resource is actively terminated or the connection between the first node and the resource component fails (all such events depicted as *"Connection dropped"* in Fig. 4). In such a case, the health check timer will expire without a new notification from the first node. The resource component will then assume that the first node has failed as the active node and will cause the resource to be released (see *"Resource Monitoring Released*")*.* After the second node periodically requests monitoring of the resource by the retry timer, the resource component will allow this just when the resource is released (see *"MonitorRequest(Resource)"* and *"MonitorRequestResponse(OK)"* of second node). This results in a switchover or failover and the second node now becomes the active node. After the first node has re-established a connection with the resource component, it also requests monitoring of the resource (see *"Connection Startup Process Requests", "Connection Startup Process Responses"* and *"MonitorRequest(Resource)"* of first node). However, it is not allowed to do so because the second node is already monitoring and is the active node (see *"MonitorRequestResponse(Not OK)"* of first node). The first node then becomes a standby node in that it can monitor the resource, i. e., it has read rights, but cannot actively control the resources or interact with them in any other way.

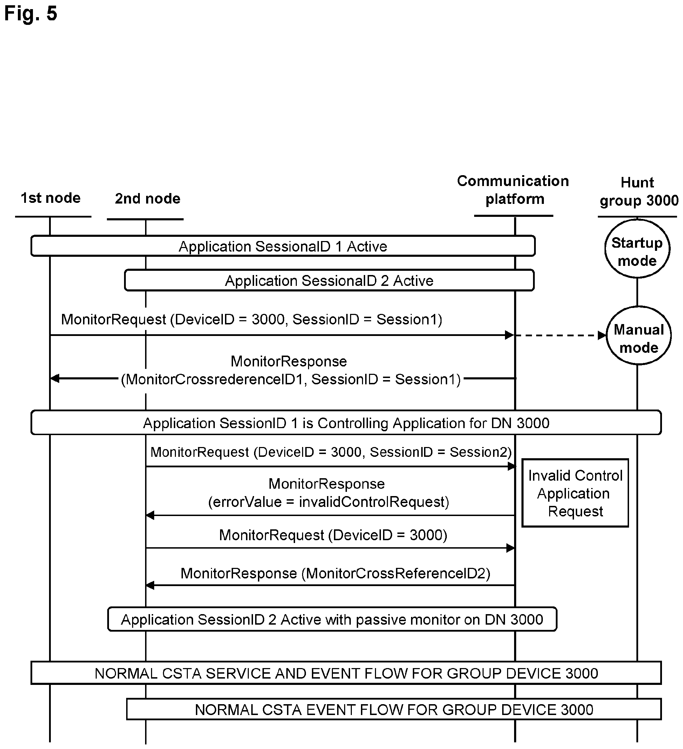

Fig. 5 shows a flowchart of a startup process of the method comprising CSTA protocol, a communication platform, and a hunt group according to another embodiment of the invention. Fig. 5 shows a specific application of the method in the field of telecommunications. Shown is a first and a second node, both nodes have established a connection to the resource component, in this case a communication platform, using the CSTA protocol (see *"Application SessionlD 1 Active"* for the first node and *"Application SessionID 2 Active"* for the second node). The communication platform can be, e. g. a PBX or another communication system. The communication platform has resources. In the case shown in Fig. 5, such a resource can be a hunt group (also shown in Fig. 5 as hunt group with DevicelD 3000). The hunt group is initially in a startup mode and is managed and controlled via the PBX or manually. In this startup mode, the hunt group is not monitored and controlled by a node in the network. The first node now requests the monitoring of the hunt group (see *"MonitorRequest(Resource)"* of first node) and this is also granted by the communication platform since, as mentioned, the hunt group is not yet monitored. The first node now controls the hunt group (see Fig. 5 *"Application SessionlD 1 is Controlling Application for ON 3000").* The second node then also requests monitoring of the hunt group (see *"MonitorRequest(Resource)"* of second node). However, this is not permitted by the communication platform (see *"MonitorResponse(errorValue = invalidControlRequest)"* of communication platform), as the first node already controls the hunt group, and the request is rejected. However, the second node can passively monitor the hunt group, i. e., it receives all information about the state of the hunt group but cannot actively exercise control over it (see Fig. 5 *"Application SessionlD 2 Active with passive monitor on DN 3000*")*.* Such information can be, for example, the number of calls in the hunt group or the number of waiting calls in a queue of the hunt group. The first node therefore has normal CSTA services and event flows for the hunt group while the second node only has normal CSTA event flows for the hunt group.

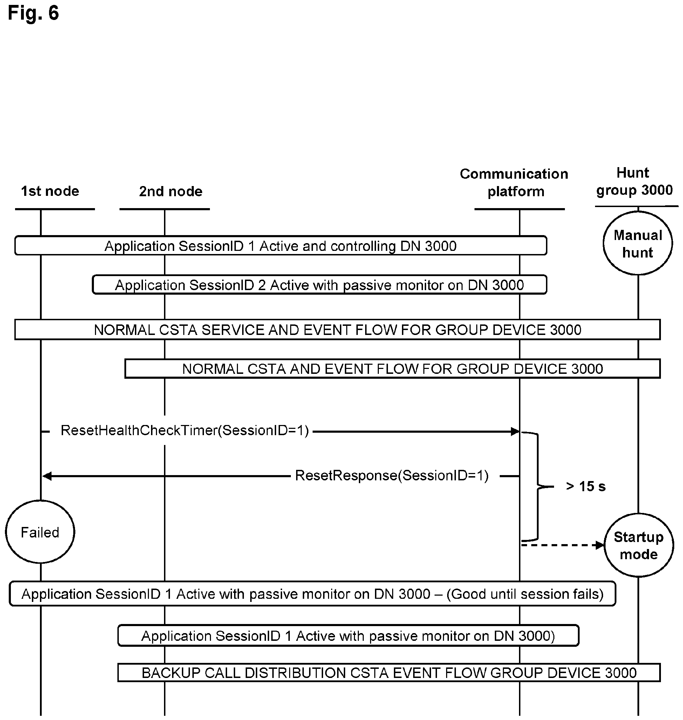

Fig. 6 shows a flowchart of the method for the setup depicted in Fig. 5 in case of a switchover/failover process according to another embodiment of the invention. As seen in the description of Fig. 5, at the beginning of Fig. 6, the first node provides normal CSTA services and event flows for the hunt group while the second node only provides normal CSTA event flows for the hunt group. However, the second node can set a retry timer (not shown), whereby when the retry timer expires, the second node makes another request to the communication platform to monitor the hunt group. The first node sets a health check timer interval which is communicated to the communication platform (see "ResetHealthCheckTimer(SessionlD=1)"). After receiving the timer interval data (in Fig. 6 this is > 15 seconds), the communication platform sets a health check timer and responds to the first node (see "ResetResponse(SessionlD=1)"). Then, the first node sets itself a HBT (not shown) which is a fraction of the health check timer interval. When this HBT expires, the first node sends a message to the communication platform to reset the health check timer interval. The communication platform's health check timer is therefore reset with each new HBT interval expiry communication (not shown). In the event of an error or non-functioning of the first node, it will no longer send messages to the communication platform. The same applies in the event that the connection between the first node and the communication platform fails (all such events depicted as *"Failed"* in Fig. 6). In such a case, the health check timer will expire without a new notification from the first node. The communication platform will then assume that the first node has failed and will cause the hunt group to be released which puts the hunt group back into startup mode. If the connection between the communication platform and the first node still exists, the first node is managed as a passive monitoring node of the hunt group. (See Fig. 6 "*Application SessionID 1 Active with passive monitor on DN 3000"*)*.* After the second node periodically requests monitoring of the hunt group by its retry timer (not shown), the communication platform will allow such a monitoring just when the hunt group is released. This results in a switchover or failover and the second node now provides a backup call distribution CSTA event flow for the hunt group.

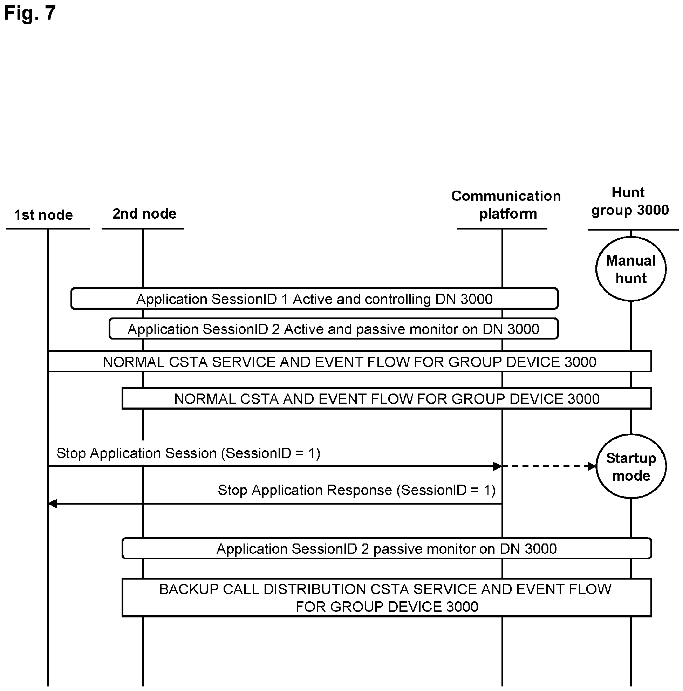

**Fig. 7** shows a flowchart of the method for the setup depicted in Fig. 5 and Fig. 6 in case of a manual stop process according to another embodiment of the invention. Basically, the description of Fig. 6 can be applied here with the only difference that in this case the connection or rather the active monitoring by the first node of the hunt group is terminated by the node itself without an error necessarily having to occur (see Fig. 7 *"Stop Application Session (SessionlD = 1)")*. In this case, the communication platform will also release the hunt group and put it back to startup mode. This means that the second node, which previously only passively monitored the hunt group, can now request active monitoring of the hunt group and thus provides backup call distribution CSTA event flow for the hunt group.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- 1st, 2nd node: first, second node
- HBT: heartbeat timer
- DN 3000: Group device number 3000
- CSTA: Computer Supported Telecommunications Applications
- s: second(s)

- S 110 - 530: method steps S110 to S530

## Claims

1. A method for a hot standby concept in a redundant network system, wherein the method comprises the steps of:
S110 establishing, by an application of a first node, a first connection to a resource component;
S111 requesting, by the application of the first node, to start monitoring a first resource, wherein the first resource is part of the resource component;
S112 receiving, by the application of the first node, an acceptance to monitor the first resource from the resource component, and setting the first node as an active node;
establishing, by an application of a second node, a second connection to the resource component;
requesting, by the application of the second node, to start monitoring the first resource,
receiving, by the application of a second node, the rejection to monitor the first resource from the resource component, and setting the second node as a standby node;
starting, by the application of the second node, a retry timer configured to request again to monitor the first resource, if the retry timer is expired;
releasing, by the resource component, the monitoring of the first resource from the application of the first node, if a failure in the first connection is detected;
requesting, by the application of the second node, to monitor the first resource from the resource component, if the retry timer is expired, and
receiving, by the application of a second node, the acceptance to monitor the first resource from the resource component and setting the second node as active node.

2. The method according to claim 1, wherein the method comprising the steps of:
S200 receiving, by the application of the first node, a rejection to monitor the first resource from the resource component, if the first resource is already monitored, and setting the first node as a standby node;
S210 starting, by the application of the first node, a retry timer for periodically requesting to monitor the first resource of the resource component, in case the first resource is available for monitoring.

3. The method according to claim 1, wherein the method further comprises
S300 sending, by the application of the first or the second node, a snapshot request to the resource component to receive a current status of one or more resource, in case the first or the second node is the active node.

4. The method according to any of the preceding claims, wherein the method further comprises the steps:
S410 querying, by the application of the first node, the resource component if a second or any further resource is available for monitoring;
S420 requesting, by the application of the first node, to monitor the second or any further resource;
S430 generating an alarm, by the application of the first node, in case the request to monitor the second or any further resource is rejected by the resource component; and
repeating, by the application of the first node, the steps S410 to S430 until no further resource is available for monitoring and S440 ending the method, wherein the first node remains as active node.

5. The method according to claim 4, wherein after step S420 the method further comprises the steps:
S510 receiving, by the application of the first node, the acceptance to monitor the second or any further resource from the resource component;
S520 sending, by the application of the first node, a snapshot request to the resource component to receive a current status of the second or any further resource; and
S530 repeating, by the application of the first node, the steps S410 to S520 until no further resource is available for monitoring and ending the method, wherein the application of the first node remains as active node.

6. The method according to any of the preceding claims, wherein the method further comprises the steps:
- setting, by the application of the first, the second or any further node, a health check timer interval, in case the first, the second or any further node is the active node;
- sending, by the application of the active node, a health check message every n part of the health check time interval to the resource component, wherein the health check message comprises the health check timer interval; and
- setting, by the resource component, upon receiving the health check message a health check timer according to the received health check timer interval from the application of the active node.

7. The method according to any of the preceding claims, wherein the method further comprises the steps:
- releasing, by the resource component, the monitoring of the first resource from the application of the active node in case the health check timer expires without receiving a health check message by the application of the active node, wherein then the active node is no longer considered as the active node.

8. The method according to claim 7, wherein the n part of the health check time interval is ≤ 2/3, preferably ≤ 1/2, and most preferably <_ 1/3.

9. The method according to any of the preceding claims, wherein the resource is a conference call session, a video session, a contact center queue, a transaction queue, a hunt group.

10. The method according to any of the preceding claims, wherein the resource component is a communication and collaboration system, a communication platform, a business telephone system, a Private Branch Exchange, PBX, system, a media or content server, a contact center system, a transaction handler system.

11. A system for a hot standby concept in redundant network systems, wherein the system is configured to perform the method according to any one of the claims 1 to 10.

12. The system according to claim 11, wherein the system comprises
- at least a first node and a second node;
- at least a first application and a second application;
- at least a resource component; and
- at least a resource to be monitored.
